Europäisches Patentamt

European Patent Office

Office européen des brevets

(19)

(11) Publication number: 0 338 335

A1

## (12) EUROPEAN PATENT APPLICATION

(21) Application number: 89106056.8

(51) Int. Cl.⁴: **B29C 63/02**

(22) Date of filing: 06.04.89

(30) Priority: 20.04.88 IT 8336988

(43) Date of publication of application:
25.10.89 Bulletin 89/43

(84) Designated Contracting States:
AT BE CH DE ES FR GB GR IT LI NL SE

(71) Applicant: LIGNUM SpA
Via Palmarina 115
I-33048 San Giovanni al Natisone (UD)(IT)

(72) Inventor: Mariani, Luigi
Galleria Mazzini 1
I-20039 Seregno (MI)(IT)
Inventor: De Biaggio, Alceo
Via S. Giovanni 10
I-33044 Manzano (UD)(IT)

(74) Representative: Petraz, Gilberto Luigi
G.L.P. S.a.s. di Gilberto Petraz P.le Cavedalis
6/2
I-33100 Udine(IT)

(54) **Process to coat panels with a thermoplastic material and device to perform the process.**

(57) Process to coat panels (10) consisting of wood or of a foam or composite material or of a base of wood fibres with a finishing film of a material suitable to be hot-moulded and to adhere to one face (31) of the panels (10) by means of an adhesive, the process comprising a pressing step in which at least one panel (10) is borne on a conveyor (11) into a hot-pressing device consisting of pairs of rolls (15-16), at least one roll in each pair being at least partially coated with a heat-resistant elastomeric material, the pressing step being preceded by a convection heating step to heat an assembly consisting of the panel (10), adhesive and thermoplastic finishing film, during which the thermoplastic finshing film and the adhesive are softened homogeneously by convection, the pressing step by means of rolls (15-16) taking place at a substantially constant temperature in a chamber (13) with temperature restoration means (21) and being followed by a forced-draught cooling step acting at least on the aforesaid face (31) of the panel (10) when leaving the pressing device.

Device (27) to press panels which is suitable for employment in performing a process according to the above description and comprises at least two pairs of superimposed rolls (15-16), at least one roll (15) in each pair of rolls (15-16) being provided with a coating of an elastomeric material, whereas the other roll (16) in the pairs of rolls (15-16) has a smooth surface and is fitted so as to be able to idle on a rigid support.

## PROCESS TO COAT PANELS WITH A THERMOPLASTIC MATERIAL AND DEVICE TO PERFORM THE PROCESS

This invention concerns a process to coat panels with a thermoplastic material according to the preamble of the main claim.

To be more exact, the invention concerns a process for coating and treating panels of wood or a rigid foam or composite material or of a base of wood fibres, such panels containing on one or both of their faces engravings, tracings or reliefs forming a pre-selected design, by means of a film capable of being moulded and of adhering intimately to the engravings or reliefs.

The invention concerns also a device to perform such process.

The invention is applied mainly in the field of preparation of cupboard doors, doors for fitted kitchen furniture and the like.

DE-C-1292546 discloses a method to apply a finishing film to panels made of pre-foamed plastic material that should not undergo pressures which would damage the panel beyond repair.

The method provides for the finishing film to be pressed onto the pre-foamed plastic panel mainly by a roll which applies a light pressure that cooperates with a strong draught of hot air, which supports the finishing film and sets in progress the polymerization and drying of the adhesive.

This method cannot be used in the case of our invention in question since it would not enable the finishing film to adhere to the cavities on the panel to be treated.

Italian patent application No. 84134 A/86 (EP-A-0.258.634) discloses a method to make panels consisting of a chipboard base containing recesses produced in a step of processing by panthograph the surfaces to be treated; in this method an adhesive layer is spread on the surface, a finishing film of thermoplastic material is deposited on the adhesive layer and the sandwich thus built up is first pre-heated and then introduced into a machine comprising a plurality of pairs of rolls and is pressed between these pairs of rolls during its movement to the exit of the machine.

This method and machine entail a plurality of drawbacks and shortcomings which make the performance of the method very hard and result in a product (panel) which does not meet the required features.

A first drawback of this method is due to the fact that the pre-heating step is carried out by radiation heater elements, in this case with infrared lamps. This type of heater element causes a quick, excessive heating of the surface of the irradiated thermoplastic finishing film, and the heat does not penetrate in depth to soften the finishing film and layer of adhesive. The outcome is that the panel is introduced into the machine in a condition unsuitable to be pressed.

A second drawback of the method described in the cited Italian patent application is due to the fact that, as the machine is equipped with further internal radiation heating elements, the temperature of the panel rises from $30°$-$40°$ at the inlet of the machine to about $120°$ at the outlet of the same.

Owing to this high temperature at the outlet the thermo plastic finishing film leaves the machine in an almost molten condition.

Since the panel is cooled naturally thereafter, the thermoplastic finishing film shrinks and leads to the formation of bubbles and cracks in the panel.

The machine to perform this method entails generally a plurality of drawbacks and shortcomings. For instance, it provides for the lower rolls to be powered and to be of steel. In practice this causes great difficulty, if not indeed complete inability, in introducing the panels into the machine.

Moreover, the fact that heating elements have been provided between the pairs of upper rubber rolls seems to be wholly unsatisfactory since it only leads to a very swift wear of the rubber rolls and has no other effect on the panel except bringing the thermoplastic finishing film to its melting point.

We should also mention the drawback that, as the lower rolls are powered and are driven in synchronization, the panel is pressed by them against the upper rubber rolls.

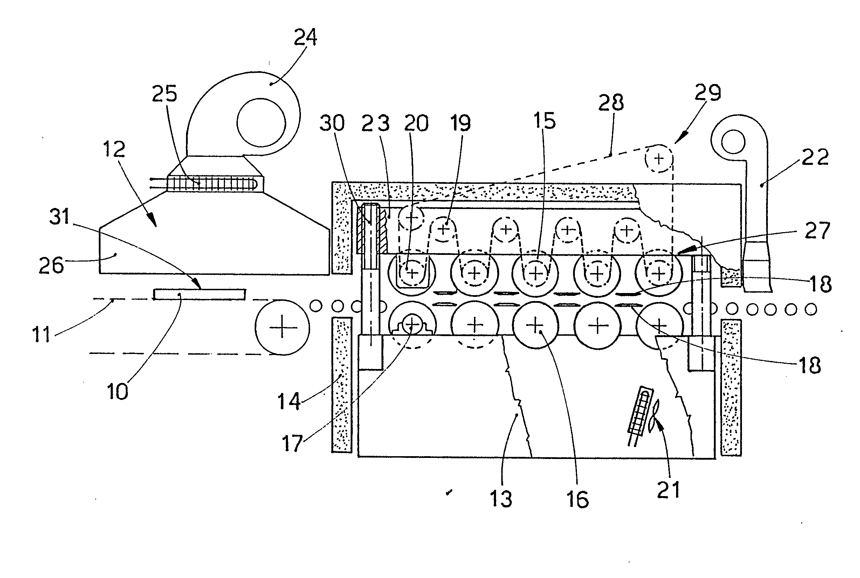

As the diameter of the upper rolls varies according to the hollows or engravings on the panel, the peripheral speeds of the upper and lower rolls will differ, thus leading to anomalies in the drawing of the panel due to undesired friction and leading to breakages of the upper rubber rolls and to abrasions on the panels.

This effect is actually enhanced in this machine by the fact that each rubber roll possesses a hardness different from that of the other rolls. The rubber will be pressed in each roll in a different manner from the rubber of the others and therefore each roll will have a different speed from that of the other rolls, with the resulting unsatisfactory effects cited above.

Frequent replacement or regeneration of the rubber rolls entails heavy costs which have a great effect on the final cost of the products.

Document DE-A-2.731.657 discloses a process and a machine for the treatment of panels. The process provides for:-

a) the depositing of a layer of adhesive on the thermoplastic material and the pre-heating thereof;

b) the pre-heating of the panel, the depositing thereon of a layer of adhesive, a further pre-heating and the depositing of a further layer of adhesive;

c) the union of the panel and the thermoplastic finishing film by applying the pressure of rolls with a further heating between neighbouring pairs of rolls; the rolls are coated with silicone rubber resistant to heat and are heated by radiation elements.

Both the process and the machine described in the cited DE document are complicated and very expensive.

In this connection it should be noted that the silicone rubber used for the pressure rolls is extremely costly and the depositing of many layers of adhesive on the thermoplastic finishing film and on the panel means heavy costs.

The fact also that the lower rolls are powered entails the same problems of introduction of the panel as we cited above regarding Italian patent application No. 84134 A/86.

Document FR-A-2.293.001 discloses an analogous process applied to the field of covering printed circuits with a layer of light-sensitive material.

US 4,170,511 discloses a method and machine which serve to create a laminated finishing layer on an intermediate panel so as to form a sandwich. This document includes means to regulate the pressure of the rolls so as to maintain the required thickness of the laminated finishing layer. In this case the specific regulation is unimportant as the thickness of the finishing film is determined.

The present invention has the purpose of obviating the above drawbacks and shortcomings and therefore of providing a process and device to coat panels with a safe, reliable and economical thermoplastic material.

This purpose is attained owing to the provision of a process and device of the type mentioned above and possessing the features described in the characterizing parts of the respective main claims. The dependent claims describe preferred .forms of embodiment of the invention.

The process according to the invention provides for the pre-heating of a sandwich consisting of a panel, adhesive and thermoplastic finishing film, pre-heating being provided by forced draught.

This arrangement enables a homogeneous softening of the thermoplastic finishing film to be obtained without any surface overheating of the sheet as is found in the known processes.

After the pre-heating step the panel is introduced into a pressing device consisting of a plurality of pairs of rolls through which the panel is drawn between suitable guides.

According to an essential feature of the invention the rolls are contained within an insulated chamber equipped with a means to restore any lost heat, this means acting by convection.

The employment of a means acting by convection overcomes the problems of overheating of the panel and rolls during application of pressure, these problems being typical of the processes of the state of the art.

According to another essential feature of the invention the panel undergoes, at the exit of the pressing device, forced draught cooling, which speeds up the process of fixture of the thermoplastic finishing film to the panel and obviates the cited problems of formation of cracks.

The pressing device entails also a plurality of advantages as compared to the known devices. In particular, the drive of the rolls is synchronized for the upper rubber-coated rolls, whereas the lower rolls are idler rolls and do not entail different peripheral speeds.

Moreover, all the upper rolls are coated with rubber linings having the same hardness.

According to the invention at least the rubber-coated rolls are kept at a constant temperature by internal controlled heating means.

According to a preferred form of the embodiment of the invention a heat exchanger circuit employing diathermic oil passes within the upper rolls so as to keep within them a homogeneous temperature which, in passing outwards, will not damage the rubber coating.

Further advantages of the invention will become clear on reading the following description of an embodiment of the invention, given as a non-restrictive example, together with the help of the attached figure, which gives a diagram of a side view of a plant to coat and treat panels according to the invention.

In the attached figure a panel 10 containing recesses or reliefs prepared in an earlier process, for instance by mechanical impression or removal, has a suitable face 31 already spread with an adhesive and provided with a thermoplastic finishing film (PVC for instance) and is borne on a conveyor belt 11 beneath a convection heater means 12.

In this example the convection heater means 12 consists of an electric fan 24, a battery of heaters 25 and a hood 26 that directs a flow of hot air onto the face 31 bearing the thermoplastic finishing film of the panel 10 passing through.

This operation has the purpose of softening the finishing film on the panel 10 and also the adhesive.

Thereafter the panel 10 enters a chamber 13 delimited by insulated walls 14 and containing a pressing device 27.

This pressing device 27 comprises generally a plurality of pairs of rolls 15-16. The figure shows five upper rolls 15 and five lower rolls 16 coupled in pairs.

According to the invention the lower rolls 16, which in this case do not cooperate with the face to be coated, have a smooth surface; for instance, they may be made of ground chromium-plated steel and are installed so as to idle on supports 17 advantageously positioned at the sides.

Moreover, slide blocks 18 are placed between one pair of rolls 15-16 and the next and have the task of guiding the panels between two successive pairs of rolls 15-16.

In the example shown the upper rolls 15 are driven in synchronization with each other by a drawing system, which is represented by a chain 28 and a set of sprockets 19 in the figure.

The upper rolls 15 are fitted to supports 20 belonging to a rigid structure 23, which can be adjusted in height, according to the thickness of the panel to be coated, by an adjustment system 30, which may comprise threaded shafts or jacks and may have a rigid or resilient adjustment.

Moreover, the upper rolls 15, which cooperate with the face 31 to be treated, are provided with a coating of a heat-resistant elastomeric material.

The upper rolls 15 are equipped with internal heater means controlled, for instance, by an electric resistor.

According to a preferred embodiment the upper rolls 15 are provided with internal hollows which permit the passage of a heater liquid, such as diathermic oil, which keeps the elastomeric material at an almost constant temperature by means of a thermostat and a heat exchanger (not shown here).

Means 21 to restore the temperature, for instance an electric fan, are also included in the chamber 13 and have the purpose of restoring by means of a thermostat (not shown here) the calories lost in the zones of movement of the panels, namely in the inlet and exit zones, and therefore of keeping a constant temperature within the chamber 13 itself.

According to a variant the lower rolls 16 too, like the upper rolls 15, may be heated with suitable controlled internal heater means.

As can be understood clearly from the description hereinbefore, the passage of the panel 10 between the pairs of rolls 15-16 entails a pressure on the thermoplastic finishing film against the reliefs or recesses in the face 31 of the panel 10.

On leaving the pressing device 27 the panel 10 is lapped by a stream of cold air coming from a cooling fan 22, which speeds up the cooling process and enables the thermoplastic finishing film to adhere to the panel without any defects such as detachment of the film from the panel.

According to the invention the diameter of the rolls 15-16 will be between 200 and 400 mm. and advantageously about 250 to 300 mm.

Moreover, according to the invention the lengthwise distance between centres of the rolls 15 and between centres of the rolls 16 will be between 220 and 420 mm.

With rolls having a diameter of about 300 mm. the distance between centres will be advantageously about 320 to 330 mm.

Once again according to the invention the minimum number of pairs of rolls 15-16 will be two, while the maximum number will be ten, the most suitable number being between four and six, depending on the processing speed.

## Claims

1 - Process to coat panels (10) consisting of wood or of a foam or composite material or of a base of wood fibres with a finishing film of a material suitable to be hot-moulded and to adhere to one face (31) of the panels (10) by means of an adhesive, the process comprising a pressing step in which at least one panel (10) is borne on a conveyor (11) into a hot-pressing device consisting of pairs of rolls (15-16), at least one roll in each pair being at least partially coated with a heat-resistant elastomeric material, the process being characterized in that the pressing step is preceded by a convection heating step to heat an assembly consisting of the panel (10), adhesive and thermoplastic finishing film, during which the thermoplastic finishing film and the adhesive are softened homogeneously by convection and in that the pressing step by means of rolls (15-16) takes place at a substantially constant temperature in a chamber (13) with temperature restoration means (21) and in that the pressing step by means of rolls (15-16) is followed by a forced-draught cooling step acting at least on the aforesaid face (31) of the panel (10) when leaving the pressing device.

2 - Process as claimed in Claim 1, in which the pressing step takes place in a thermally insulated chamber (13) provided with insulated walls (14).

3 - Process as claimed in Claim 1 or 2, in which the step of pressing the face (31) of the panel (10) is carried out by employing rolls (15) of which the elastomeric coating possesses the same hardness.

4 - Process as claimed in any claim hereinbefore, in which the panels (10) contain recesses or reliefs.

5 - Device (27) to press panels which is suitable for employment in performing a process according to any of Claims 1 to 4 inclusive and is characterized in that it comprises at least two pairs of superimposed rolls (15-16), at least one roll (15) in each pair of rolls (15-16) being provided with a coating of an elastomeric material, whereas the other roll (16) in the pairs of rolls (15-16) has a smooth surface and is fitted so as to be able to idle on a rigid support.

6 - Device (27) as claimed in Claim 5, in which the upper rolls (15) of the pairs of rolls (15-16) acting on the face (31) of the panel (10) to be coated are connected together by a drawing means (29) able to drive the upper rolls (15) coated with an elastomeric material in synchronization at the same speed, such rolls (15) coated with an elastomeric material being fitted to supports (20) belonging to a rigid structure (23) capable of being adjusted in height according to the thickness of the panels (10) to be pressed.

7 - Device (27) as claimed in Claim 5 or 6, in which at least one roll in each pair of rolls (15-16) is heated to a constant temperature.

8 - Device (27) as claimed in Claim 7, in which the roll heated to a constant temperature contains hollows in which a liquid coming from a heat exchanger is caused to circulate, the heated roll being at least a roll in contact with the thermoplastic material.

9 - Device (27) as claimed in any of Claims 5 to 8 inclusive, which with the rolls (15-16) is contained in a chamber (13) having insulated walls (14).

10 - Device (27) as claimed in any of Claims 5 to 9 inclusive, which comprises threaded shaft adjustment means (30) with a rigid structure (23) to adjust the reciprocal vertical distance between the rolls (15-16).

11 - Device (27) as claimed in any of Claims 5 to 9 inclusive, which comprises adjustment jack means (30) with a rigid structure (23) to adjust the reciprocal vertical distance beween the rolls (15-16).

12 - Device (27) as claimed in any of Claims 5 to 11 inclusive, in which upstream of the pressing chamber (13) is a convection heater means (12) with a hood (26) to direct a stream of hot air onto the side of the panel (10) where the thermoplastic material is located.

13 - Device (27) as claimed in any of Claims 5 to 12 inclusive, in which cooling means (22) that direct cold air onto the side of the panel (10) where the thermoplastic material is located are included downstream of the pressing chamber (13).

14 - Device (27) as claimed in any of Claims 5 to 13 inclusive, in which the diameter of the rolls (15-16) is between 200 and 400 mm.

15 - Device (27) as claimed in any of Claims 5 to 14 inclusive, in which the lengthwise distance between centres of each line of rolls is between 220 and 420 mm.

16 - Device (27) as claimed in any of Claims 5 to 15 inclusive, in which the number of pairs of rolls (15-16) forming the pressing device (27) is between two and eight.

17 - Device (27) as claimed in any of Claims 5 to 16 inclusive, in which the chamber (13) that contains the pressing device (27) comprises means (21) to restore the temperature.

18 - Device (27) as claimed in any of Claims 5 to 17 inclusive, in which slide block guides (18) are positioned between one pair of rolls (15-16) and the next pair.

EP 0 338 335 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,X | DE-B-1 292 546 (ROCMA ANSTALT) * Figures 1,2; column 3, lines 18-27 * | 1,9,12-18 | B 29 C 63/02 |
| D,Y | | 5,10,11,16 | |
| D,Y | EP-A-0 258 634 (3B S.p.A.) | 5,10,11 | |
| D,Y | US-A-4 170 511 (MILNE) | 6 | |
| A | DE-A-2 833 119 (FRIZ) | 1,9 | |
| A | DE-A-2 849 400 (GRECON GRETEN GmbH & CO. KG) | 1,9 | |
| A | EP-A-0 169 188 (BERGER) | 1,9 | |
| A | EP-A-0 166 312 (KAWAKAMI SANGYO) | 7,8 | |
| A | US-A-2 273 423 (SOMES) | 7,8 | |

TECHNICAL FIELDS SEARCHED (Int. Cl.4)

B 29 C

The present search report has been drawn up for all claims

| Place of search | Date of completion of the search | Examiner |
|---|---|---|
| THE HAGUE | 28-07-1989 | ROBERTS P.J. |